# EUROPEAN PATENT APPLICATION

(11) **EP 4 586 077 A1**
(43) Date of publication of application: **16.07.2025**
(21) Application number: 23862137.9
(22) Date of filing: 11.08.2023
(51) Int. Cl.: G06F 8/34

(54) **WEBPAGE GENERATION METHOD AND APPARATUS, AND ELECTRONIC DEVICE AND STORAGE MEDIUM**

(30) Priority: 08.09.2022 CN 202211098354
(71) Applicant: BEIJING YOUZHUJU NETWORK TECHNOLOGY CO. LTD., Beijing 101299 (CN)
(72) Inventor: WANG, Lixin, Beijing 100028 (CN)
(74) Representative: Dentons UK and Middle East LLP
(86) International application number: PCT/CN2023/112481
(87) International publication number: WO 2024/051439

(57) **Abstract**

Provided in the present disclosure are a webpage generation method and apparatus, and an electronic device and a storage medium. The method comprises: extracting visual elements from a first webpage; acquiring original attribute information of the visual elements, wherein the original attribute information comprises original position information, and the original position information is used for describing the arrangement positions of the visual elements in the first webpage; and generating a second webpage on the basis of the original position information, wherein the second webpage comprises at least some of the visual elements, the at least some of the visual elements are arranged in the second webpage according to the original position information, and the arrangement positions of the at least some of the visual elements in the second webpage are the same as the arrangement positions thereof in the first webpage. By means of the method, the same arrangement positions in a generated second webpage have visual elements the same as those at the same arrangement positions in a first webpage, such that the first webpage can be restored to the maximum extent, and many problems caused when a third-party webpage is introduced into a first-party network platform are correspondingly avoided.

## Description

This application claims the priority of a Chinese patent application submitted to the China National Intellectual Property Administration on September 8, 2022, with application number 202211098354.5 and invention title "Webpage generation method, apparatus, electronic device and storage medium", the entire content of which is incorporated in this disclosure by reference.

### TECHNICAL FIELD

The present disclosure belongs to the technical field of computers, and specifically relates to a webpage generation method, an apparatus, an electronic device and a storage medium.

### BACKGROUND

With the development of internet technologies, various services are differentiated based on webpages. For example, services for providing page designs, services for providing page maintenance and operation, webpage services for providing advertisements as purposes, and webpage and platform services for providing sales as purposes. In order to present the better page effects and achieve the business objectives of page owners, it is often necessary to introduce third-party webpages into first-party webpage service provider, for example third-party advertisement landing pages are introduced into merchant pages of e-commerce platforms. However, the introduction of such third-party pages often brings many problems. For example, the loading time of the third-party pages is too long, the production cost is high, the iteration speed is slow, the page operation complexity is high, and there are risks such as compliance and data leakage.

### SUMMARY

In order to solve the above problems, the present disclosure proposes a webpage generation method, an apparatus, an electronic device and a storage medium.

According to one aspect of the present disclosure, a webpage generation method is provided, and the webpage generation method comprises:
extracting visual elements from a first webpage;
acquiring original attribute information of the visual elements, wherein the original attribute information comprises original position information, and the original position information is used to describe a position of the visual elements arranged in the first webpage; and
generating a second webpage based on the original position information, wherein the second webpage comprises at least a part of the visual elements, and the at least a part of the visual elements are arranged in the second webpage according to the original position information;
wherein a position of the at least a part of the visual element arranged in the second webpage is the same as a position of the at least a part of the visual element arranged in the first webpage.

According to another aspect of the present disclosure, a webpage generation apparatus is provided, and the webpage generation apparatus comprises:
an extraction module, configured to extract visual elements from a first webpage;
an acquisition module, configured to acquire original attribute information of the visual elements, wherein the original attribute information comprises original position information, and the original position information is used to describe a position of the visual elements arranged in the first webpage; and
a webpage generation module, configured to generate a second webpage based on the original position information, wherein the second webpage comprises at least a part of the visual elements, and the at least a part of the visual elements are arranged in the second webpage according to the original position information;
wherein the position of the at least a part of the visual element arranged in the second webpage is the same as an arrangement position in the first webpage.

According to another aspect of the present disclosure, an electronic device is provided, and the electronic device comprises: a memory, and a processor coupled to the memory; an instruction is stored in the memory, and the method according to the present disclosure is implemented when the instruction is executed by the processor.

According to another aspect of the present disclosure, a storage medium is provided, on which a computer program is stored, and the method according to the present disclosure is implemented when the program is executed by a processor.

According to another aspect of the present disclosure, a computer program product is provided, and the computer program product comprises a computer program, wherein the method according to the present disclosure is implemented when the computer program is executed by a processor.

By using a page generation method, an apparatus, an electronic device, and a storage medium provided in the present disclosure, visual elements may be extracted from a third-party webpage, original attribute information of the visual elements is acquired, and the visual elements are arranged according to original position information in the original attribute information to generate a new first-party webpage. Because the visual elements in the same arrangement position of the generated first-party webpage are the same as those in the third-party webpage, it may maximize the restoration of the third-party webpage and correspondingly avoid many problems caused by introducing the third-party webpage in a first-party network platform.

### BRIEF DESCRIPTION OF DRAWINGS

The accompanying drawings are used to provide further understanding of the present disclosure and form a part of the specification, which are used together with the embodiments of the present disclosure to explain the present disclosure and do not constitute limitations on the present disclosure. In the attached figure:
Fig. 1 shows a schematic diagram of a third-party webpage according to an exemplary embodiment of the present disclosure;
Fig. 2 shows a flow diagram of a webpage generation method according to an exemplary embodiment of the present disclosure;
Fig. 3 shows a flow diagram of a method for extracting visual elements according to an exemplary embodiment of the present disclosure;
Fig. 4 shows a flow diagram of a method for generating a second webpage according to an exemplary embodiment of the present disclosure;
Fig. 5 shows a schematic block diagram of a webpage generation apparatus according to an exemplary embodiment of the present disclosure;
Fig. 6 shows a schematic block diagram of an electronic device used to implement exemplary embodiments of the present disclosure; and
Fig. 7 shows a schematic block diagram of a computer system used to implement exemplary embodiments of the present disclosure.

### DETAILED DESCRIPTION

Embodiments of the present disclosure will be described below with reference to the accompanying drawings. While certain embodiments of the present disclosure are illustrated in the accompanying drawings, it is to be understood that the present disclosure may be embodied in various forms and should not be construed as limited to the embodiments set forth herein, but rather, these embodiments are provided for a more thorough and complete understanding of the present disclosure. It should be understood that the drawings and embodiments of the present disclosure are for illustrative purposes only and are not intended to limit the scope of the present disclosure.

It should be understood that the various steps recited in the method implementation of the present disclosure may be performed in a different order, and/or in parallel. Further, the method implementation may include additional steps and/or omit performing illustrated steps. The scope of the present disclosure is not limited in this regard.

As used herein, the term "include" and its variations are open inclusion, that is, means "including, but not limited to". The term "based on" is "based at least in part on." The term "one embodiment" means "at least one embodiment"; the term "another embodiment" means "at least one additional embodiment"; the term "some embodiments" means "at least some embodiments". Relevant definitions for other terms will be given in the description below. It should be noted that the concepts such as "first", "second" and the like mentioned in the present disclosure are only used to distinguish different apparatuses, modules or units, and are not used to limit the sequence or interdependence of the functions performed by these apparatuses, modules or units.

It is noted that the modifications referred to as "a" or "a plurality" in this disclosure are illustrative rather than limiting, and those skilled in the art should understand that it should be understood as "one or more" unless the context clearly indicates otherwise.

The names of messages or information exchanged between multiple apparatuses in the embodiments of the present disclosure are for an illustrative purpose only and are not used to limit the scope of these messages or information.

Firstly, relevant terms involved in embodiments of the present disclosure are defined as follows:
A user terminal is an input/output device used by a user to interact with a computer system, and it mainly includes various types of computer terminal devices, for example a desktop computer, a notebook, a personal digital assistant (PDA), a portable android device (PAD), a mobile phone, and various intelligent terminals.

A server generally refers to a computer system that provides certain services to other user terminals connected to a network, and it usually has the higher stability, security, storage capacity, and computing performance than the ordinary user terminals.

A user interface is a channel for information exchange between humans and computers. The user inputs information into the computer by the user interface for operation, and the computer provides the information to the user by the user interface for the user to know the information and analyze and decision-make according to the information. For example, a session window, a website page, and a game page in instant messaging software.

A landing page, also known as a guiding page, is a page that a visitor firstly sees when a website or software is visited, and may be used to achieve advertising or marketing conversion.

A first-party landing page is a landing page provided by a single operator.

A third-party landing page is a landing page provided by a third party other than the operator and the user.

A document object model (DOM) is a platform and language independent application programming interface that may be used to dynamically connect and access programs and scripts, and update contents, structures, and styles of WWW documents.

A DOM Tree, among the many document structures of DOM, of which the most commonly used implementation mode is a tree structure. A basic element in DOM is a node, and the document structure is composed of hierarchical nodes, and the use of the tree structure is easier to express the hierarchical node structure.

DOM Tree pruning, combined with the definition of DOM Tree, literally means removing some nodes. In the present disclosure, pruning is used to represent the process of extracting the visual elements, and in this process, non-visual elements are discarded.

Flattening refers to the process of converting hierarchical structured data into flat structured data, for example all data is located below a root node.

A server side render (SSR) generates a HTML string from a component or a page by a server and sends it to a browser. By the SSR mode, a request is sent and the server returns an HTML structure of the entire page.

A client side render (CSR) requests data by an interface, and a front end dynamically processes and generates a structure and a page required by the page by JavaScript.

Lazy loading, also known as delayed loading, loads resources only when network resources are required or certain conditions are satisfied.

Src, in HTML, src is the abbreviation for source, which represents a source file and is usually used to represent an address pointing to the file. For example, <img src="ming.bmp"> represents that a file name of an image source file is ming.bmp.

With the development of internet technologies, internet services are more diversified and complicated, and subjects for providing the internet services are gradually differentiated and refined. The services of third-party internet service providers are often introduced on a single internet platform, an e-commerce platform is taken as an example, landing pages provided by third parties are often introduced into sellers' stores, products or services so as to achieve certain business objectives, such as increasing traffic, marketing conversion, and consumption information collection. However, the introduction of such third-party webpages may bring many problems, such as long loading time, high production cost, slow iteration speed, high complexity of page operations, and risks of compliance and data leakage and the like.

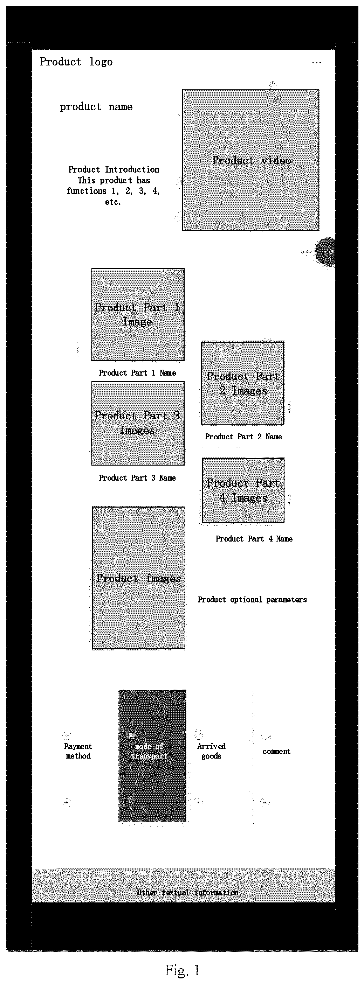

As shown in Fig. 1, a schematic diagram of a third-party webpage is exemplarily shown. The third-party webpage, for example, may be a landing page, and may achieve advertising, marketing conversion, attracting traffic, and other purposes. In the landing page of the product advertisement shown in Fig. 1, it includes a product logo, a product name, a product brief introduction, a product partial name, as well as webpage elements related to product sales, including payment modes, transportation modes, arrival of goods, and comments. These webpage elements are arranged in the form of text visual elements on the webpage. The webpage also includes product videos, product images, and a plurality of partial product images, which are arranged in the form of video visual elements and image visual elements respectively on the webpage. The webpage also includes some skip buttons and hidden operable controls, for example, it may be skipped to a payment page by clicking on a small icon above a payment mode, and different configuration parameters of a product may be selected in a pop-up control window by clicking on product optional parameters.

In order to provide the user with the better services in the first-party internet platform and avoid many problems caused by the introduction of the third-party webpage, the present disclosure provides a webpage generation method, an apparatus, an electronic device and a storage medium, which solves the above problems by generating a first-party webpage in the first-party network platform to restore the above third-party webpage.

The present disclosure provides a webpage generation method, an apparatus, an electronic device, and a storage medium.

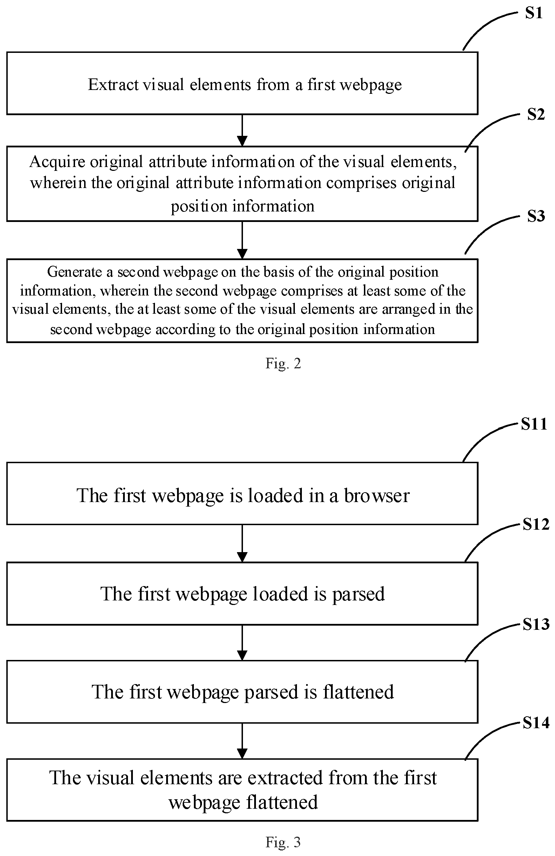

As shown in Fig. 2, a webpage generation method is disclosed, which includes the following steps:
S1, visual elements are extracted from a first webpage.

In order to present richer information and more attractive visual effects to the user, the webpage often contains rich elements, including texts, images, videos, various controls, network links, operable buttons, and some hidden function plugins. Some of the elements contained in the webpage are visual elements, such as the texts, the images, and the video elements, while some are invisible elements, such as the network links, and the hidden function plugins.

When the third-party webpage is restored from the first-party webpage, only the more important visual elements in the webpage may be extracted and other webpage elements are discarded. At the same time, limited by the implementation capability of the first-party webpage, it may be difficult to implement the operation of complex components in some third-party webpages, such as content stacking and arranging, and animation effects. In Step S1, the visual elements are extracted from the first webpage. On the one hand, it adapts to the implementation capability of the first-party webpage and simplifies the elements displayed on the first-party webpage, and on the other hand, the generation time and the loading time of the first-party webpage are also shortened, thus the system memory occupied is saved.

According to the different types of the elements, the visual elements may be divided into text visual elements, image visual elements, and video visual elements and the like.

Fig. 1 is taken as an example, the visual elements such as product videos, product and partial images, product logos, button icons, product names, product introductions, product names, product optional parameters, as well as "payment modes", "transportation modes", "arrival of goods", "comments", and "other text information" are extracted from the webpage.

S2, original attribute information of the visual elements is acquired, the original attribute information includes original position information, and the original position information is used to describe the position of the visual elements arranged in the first webpage.

The extracted visual elements have the corresponding original attribute information in the first webpage. When the visual elements are extracted in Step S1, the corresponding original attribute information may be directly acquired sometimes, and the original attribute information of the visual elements is acquired by further processing sometimes.

The original attribute information of the visual elements includes but not limited to the following information: original position information, size information, source information, font information, format information, label information and the like.

Herein, it is more crucial to acquire the original position information of the visual elements. By presenting the same visual elements at the same position in the webpage generated newly, the first webpage may be restored in a more intuitive way.

S3, a second webpage is generated based on the original position information, herein the second webpage includes at least a part of the visual elements, and the at least a part of the visual elements are arranged in the second webpage according to the original position information.

Herein, the position of the at least a part of the visual elements arranged in the second webpage is the same as the arrangement position in the first webpage.

Based on the original position information acquired, the same visual elements as in the first webpage are presented in the same arrangement position, which may achieve the restoration of the first webpage by the second webpage. But sometimes the visual elements in the first webpage are richer. The image visual elements are taken as an example, such as easily overlooked small-sized logo images, the presentation of these visual elements may not attract the attention of a browsing user, so these visual elements may be discarded by further selecting. For example, the product logo in Fig. 1 is easily overlooked due to the smaller size.

The second webpage may include all of the visual elements, or may include a part of the visual elements while discarding the other part, for example, the visual elements that are overlooked already by the browsing user are discarded.

By the above method, the visual elements are extracted from the first webpage, the original attribute information of the visual elements is acquired, and the visual elements are arranged according to the original position information in the original attribute information to generate the second webpage. The arrangement position of the visual elements in the second webpage generated is the same as its arrangement position in the first webpage, thereby the maximum restoration of the first webpage is achieved, and correspondingly many problems caused by introducing the third-party webpage in the first-party network platform are avoided.

Referring to Fig. 3, Fig. 3 shows a flow diagram of a method for extracting visual elements according to an exemplary embodiment of the present disclosure. As shown in Fig. 3, in some embodiments, Step S1 may further include:
S11, the first webpage is loaded in a browser.

Specifically, in some embodiments, the first webpage may be loaded by a headless browser.

S12, the first webpage loaded is parsed.

In some embodiments, the first webpage may be an SSR or CSR-type webpage. When the elements contained on the webpage are more and more complex, the loading time may be longer, and it may take a long time to wait for the loading to complete. It is considered that the webpage may contain elements that take a long time to load but may not necessarily be used, the parsing of the first webpage may begin when the loading of the first webpage is basically completed.

S13, the first webpage parsed is flattened.

Usually, the webpage may adopt a tree document structure, namely the first webpage loaded is parsed, DOM Tree of the first webpage may be acquired, and the first webpage parsed is processed, namely the DOM Tree is processed.

In the tree document structure, the element in the webpage may be a specific certain node. When there are many layers of the nodes, it is not beneficial for extracting the elements and its attribute information from the webpage. By flattening, the tree structure may be converted to a flat structure, it is easier to extract the elements and its attribute information from the webpage, the extraction time and occupied processing resources are reduced.

S14, the visual elements are extracted from the first webpage flattened, and the visual elements include image visual elements, text visual elements, and video visual elements.

The first webpage flattened is more suitable for an operation of extracting webpage information. The visual elements are extracted from the first webpage, and the visual elements at least include images, texts, and videos.

In some embodiments, the extraction of the image visual elements and the video visual elements may be achieved by labels of the webpage elements. For example, the extraction of the image visual elements may be achieved by matching the label with img or pic, and the extraction of the video visual elements may be achieved by matching the label with video.

In some embodiments, the extraction of the text visual elements may be achieved by traversing all elements in the first page and extracting text information from them. Fig. 1 is taken as an example, all elements in the first page are traversed and text information are extracted from them, it may mean that some text information pages that are not presented on the current page in Fig. 1 are extracted, such as hidden specific comment information, and specific option text information for product optional parameters.

In some embodiments, in Step S2, the original position information may include at least one of the following: width and height information and webpage margin information. The webpage margin information may be, for example, a margin to the top of the webpage (top value), and a margin to the left edge of the webpage (left value).

In some embodiments, in Step S2, the original attribute information further includes at least one of the following:
for the image visual elements, the original attribute information includes original resource information, original size information, and original position information;
for the text visual elements, the original attribute information includes original font information and original position information, and
for the video visual elements, the original attribute information includes original position information of the video visual elements that conform to a preset format.

Correspondingly, Step S2 may be further implemented as follows:
According to the types of visual elements, original attribute information of the visual elements is acquired, the original attribute information includes original position information, and the original position information is used to describe the position of the visual elements arranged in the first page.

Herein:
For the image visual elements, original resource information, original size information, and original position information of the image visual elements are acquired;
for the text visual elements, original font information and original position information of the text visual elements are acquired; and
for the video visual elements, original position information of the video visual elements that conform to a preset format is acquired.

Herein, the preset format may be determined according to formats supported by the webpage to be generated. For example, when the webpage to be generated only supports videos in mp4 format, the preset format may be the mp4 format. Only for the extracted video visual elements of which the original format information is the mp4 format, its corresponding original attribute information is acquired. In other words, the video visual elements that do not conform to the preset format are discarded in this step.

In some embodiments, for the image visual elements, when a lazy loading strategy is adopted so that image information is inaccurate, original image resources may be acquired by the way of simulating page scrolling or image src stitching. In addition, when there is a deviation in image size information due to incomplete page loading, the original size information of images may be acquired by reloading the images. The original size information may be used to further select the image visual elements. For example, when the original size information is too small, it may mean that the current image visual elements are not important and may be discarded.

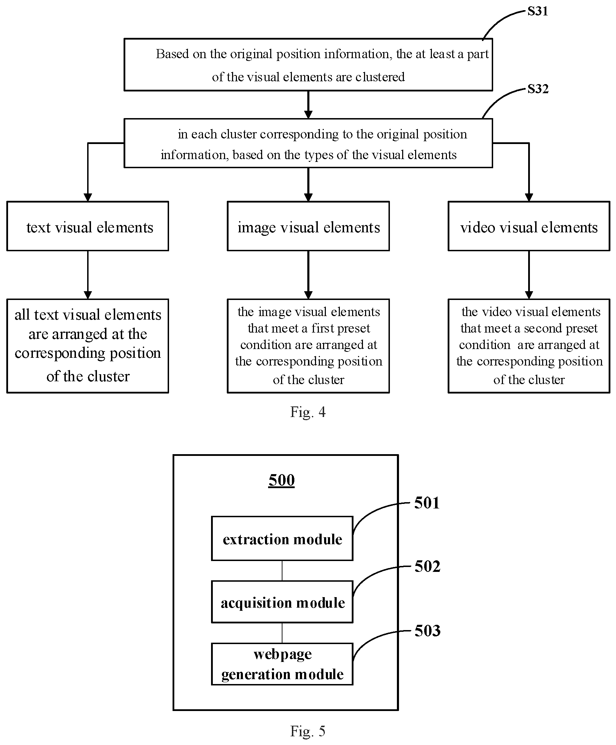

In Step S3, by using the original attribute information of the visual elements, especially the original position information contained therein, the present disclosure may achieve the restoration of the first webpage by the second webpage. Referring to Fig. 4, Fig. 4 shows a flow diagram of a method for generating a second webpage according to an exemplary embodiment of the present disclosure. As shown in Fig. 4, in some embodiments, Step S3 further includes:
S31, based on the original position information, the at least a part of the visual elements are clustered; and
S32, in each cluster corresponding to the original position information, based on the types of the visual elements, the visual elements are arranged according to the following rules:
   for text visual elements, all text visual elements included in the cluster are arranged at the corresponding position of the cluster;
   for image visual elements, the image visual elements that meet a first preset condition in the cluster are arranged at the corresponding position of the cluster; and
   for video visual elements, the video visual elements that meet a second preset condition in the cluster are arranged at the corresponding position of the cluster;
   herein, the first preset condition is related to original attribute information of the image visual elements; and the second preset condition is related to sorting of the video visual elements in the cluster.

In order to restore the first webpage, the generated second webpage should present the same visual elements as the first webpage in the same position as much as possible. By clustering according to the original position information, the visual elements in the same original position may be grouped together, thus it is convenient to arrange the visual elements by the way of clustering one by one and restore the first webpage.

In some embodiments, the original position information may be at least one of top value, left value, and width/height value.

In some embodiments, when the original position information is the top value, the visual elements in the corresponding cluster may be arranged one by one from small to large according to the top value.

In some embodiments, the original attribute information of the image visual element further includes original size information, and the first preset condition may be that the original size of the image visual element is the largest.

In some embodiments, the second preset condition is a video visual element with the foremost sorting in the cluster.

In some embodiments, the visual elements contained on the first webpage are richer, for example there are different types of the visual elements in the same position. If it is arranged directly according to S32, it may cause the different types of the visual elements to overlap together. In this situation, S32 further includes the following steps:
in each cluster corresponding to the original position information, according to a priority order of the the type of the visual elements, visual elements with the highest priority are selected;
based on the types of the visual elements, the visual elements are arranged according to the following rules:
for text visual elements, all text visual elements included in the cluster are arranged at the corresponding position of the cluster;
for image visual elements, the image visual elements that meet a first preset condition in the cluster are arranged at the corresponding position of the cluster; and
for video visual elements, the video visual elements that meet a second preset condition in the cluster are arranged at the corresponding position of the cluster.

In some embodiments, the priority order may be that the priority from high to low is the video visual elements, the image visual elements, and the text visual elements sequentially.

In some embodiments, before Step S31 in Step S3, it further includes:
S30, based on the types of visual elements, at least a part of the visual elements are selected from the visual elements;
herein, the selecting is performed according to at least one of the following rules:
   for text visual elements, the text visual elements of which the original font conforms to a preset font condition are retained;
   for image visual elements, the image visual elements of which the original size conforms to a preset size condition are retained and/or the image visual elements of which the original image resource conforms to a preset image resource condition are retained; and
   for video visual elements, all video visual elements that conform to a preset format condition are retained.

In some embodiments, the preset font condition may be that the original font size is greater than the median font size of all text visual elements.

In some embodiments, the preset size condition may be that the original size is not less than a preset ratio of the screen size, for example the width is not less than 1/4 of the screen width, and the width height product is not less than 1/10 of the screen area.

In some embodiments, the preset image resource condition may be a preset address source condition, for example the address of image resources come from a local or specific address.

In some embodiments, the preset format condition may be a playing format that the second webpage may support, for example an mp4 format.

Fig. 1 is taken as an example, after being selected in S30, the product logo is discarded because the original size does not conform to the preset size condition, and the product introduction information is discarded because the font size does not conform to the preset font condition.

By using the selecting operation in Step S30, the importance and visualization effect of the visual elements are considered in advance, potential unimportant visual elements are optimized, the range of the visual elements to be arranged is further narrowed, and the entire page generation process is optimized. For example, the setting of the font condition takes into account that the smaller font may be unimportant text information, the setting of the image size condition takes into account that images that are too small are neither eye-catching nor have good filling effects, the setting of the image resource condition takes into account the difficulty of acquiring the images and loading speed and the like, as well as the strong visualization effect of video resources, which should be retained as much as possible within the supported format range.

The above embodiments include specific steps for webpage generation respectively. It may be understood that in order to achieve the above functions, the corresponding steps may be executed correspondingly by a computer containing hardware structures and/or software modules corresponding to each function that executes the specific steps mentioned above. It should be easy for those skilled in the art to realize that, combined with the steps described in the embodiments disclosed in this article, the present disclosure may be achieved in the form of hardware or a combination of software and hardware. Whether a certain function is executed by the hardware or computer software driven hardware depends on specific applications and design constraint conditions of technical schemes. Professional technicians may use different methods to implement the described functions for each specific application, but such implementation should not be considered beyond the scope of the present disclosure.

The embodiments of the present disclosure may divide the computer into functional units according to the above method examples. For example, each function may be divided into different functional modules, or two or more functions may be integrated into one processing module. The integrated module mentioned above may be implemented in the form of hardware or software functional modules. It should be noted that the division of the modules in the embodiments of the present disclosure is schematic and only a logical functional division. In actual implementation, there may be other division modes.

When each functional module is divided by using each corresponding function, an exemplary embodiment of the present disclosure provides a webpage generation apparatus, and the webpage generation apparatus may be located at a terminal position or located on a server side. Fig. 5 shows a schematic block diagram of a webpage generation apparatus according to an exemplary embodiment of the present disclosure. As shown in Fig. 5, the webpage generation apparatus 500 includes: an extraction module 501, an acquisition module 502, and a webpage generation module 503.

The extraction module 501 is used to extract visual elements from a first webpage;
the acquisition module 502 is used to acquire original attribute information of the visual elements, the original attribute information includes original position information, and the original position information is used to describe the position of the visual elements arranged in the first webpage; and
the webpage generation module 503 is used to generate a second webpage based on the original position information, herein the second webpage includes at least a part of the visual elements, and the at least a part of the visual elements are arranged in the second webpage according to the original position information;
herein, the position of the at least a part of the visual elements arranged in the second webpage is the same as the arrangement position in the first webpage.

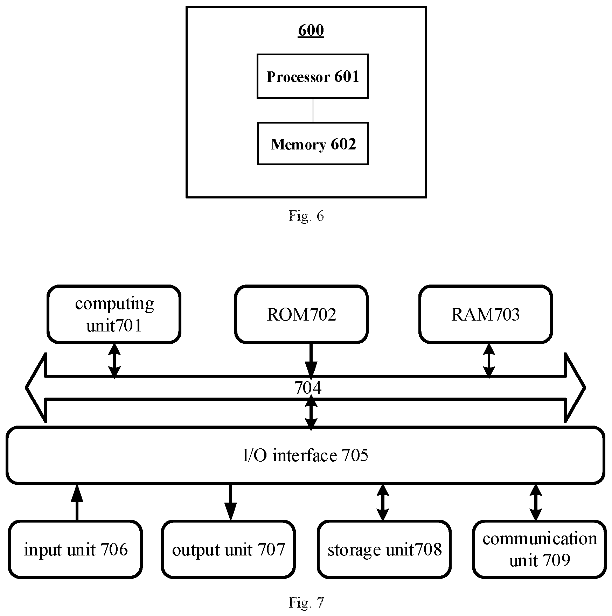

Fig. 6 shows a schematic block diagram of an electronic device according to an exemplary embodiment of the present disclosure. As shown in Fig. 6, the electronic device 600 includes a memory 602 and a processor 601 coupled to the memory 602, and the processor 601 may execute the corresponding steps in the above webpage generation method.

In some embodiments, the memory 602 may include a read-only memory and a random access memory, and provides operating instructions and data to the processor. A part of the memory may also include a non-volatile random access memory (NVRAM).

In some implementation modes, as shown in Fig. 6, the processor 601 executes corresponding operations by calling an operating instruction stored in the memory (the operating instruction may be stored in an operating system). The processor 601 controls processing operations of any one of terminal devices, and the processor may also be referred to as a central processing unit (CPU). The memory 602 may include the read-only memory and the random access memory, and provides the instructions and data to the processor 601. A part of the memory 602 may also include NVRAM. For example, in applications, memory, communication interfaces, and memory are coupled together by a bus system, herein the bus system may include not only a data bus, but also a power bus, a control bus, and a status signal bus and the like.

The method disclosed in the above embodiment of the present disclosure may be applied in the processor 601 or implemented by the processor 601. The processor 601 may be an integrated circuit chip and has signal processing capacity. In the implementation process, each step of the above method may be completed by hardware integrated logic circuits or software instructions in the processor 601. The above processor 601 may be a general-purpose processor, a digital signal processor (DSP), an application specific integrated circuit (ASIC), a field-programmable gate array (FPGA), or other programmable logic devices, discrete gate or transistor logic devices, or discrete hardware components. The general-purpose processor may be a microprocessor or the processor may also be any conventional processors and the like. The steps of the method disclosed in the embodiments of the present disclosure may be directly reflected as being executed by a hardware decoding processor, or executed by a combination of hardware and software modules in the decoding processor. The software module may be located in the memory 602, such as a random access memory, a flash memory, a read-only memory, a programmable read-only memory or electrically erasable programmable memory, a register, and other mature storage media in this field. The processor 601 reads information from the memory 602 and completes the steps of the above method in combination with its hardware.

In addition, according to some embodiments of the present disclosure, when various operations/processes according to the present disclosure may be implemented by software and/or firmware, programs constituting the software may be installed from a storage medium or network to a computer system with a dedicated hardware structure, such as the computer system 700 shown in Fig. 7. When various programs are installed, the computer system may execute various functions, including the functions such as those described above. Fig. 7 is a block diagram showing an exemplary structure of a computer system that may be used according to an embodiment of the present disclosure.

The computer system may include various forms, such as a laptop computer, a desktop computer, a workbench, a personal digital assistant, a server, a blade server, a mainframe computer, and other suitable computers. The computer system may also represent various forms of mobile terminal devices, such as the personal digital assistant, a cellular phone, a smart phone, a wearable device, and other similar mobile terminal devices. The components, their connections and relationships, and their functions shown in this article are only examples and are not intended to limit the implementation of the present disclosure described and/or required in this article.

As shown in Fig. 7, the computer system 700 includes a computing unit 701, and it may perform various appropriate actions and processes according to computer programs stored in a read-only memory (ROM) 702 or computer programs loaded from a storage unit 708 into a random access memory (RAM) 703. In the RAM 703, various programs and data required for the operation of the computer system 700 may also be stored. The computing unit 701, the ROM 702, and the RAM 703 are connected to each other by a bus 704. An input/output (I/O) interface 705 is also connected to the bus 704.

A plurality of components in the computer system 700 is connected to the I/O interface 705, including: an input unit 706, an output unit 707, a storage unit 708, and a communication unit 709. The input unit 706 may be any types of devices that may input information to the computer system 700. The input unit 706 may receive input figure or character information, as well as generate key signal input related to user settings and/or functional controls of the electronic device. The output unit 707 may be any types of devices that may present information, and may include but not limited to a displayer, a speaker, a video/audio output terminal, a vibrator and/or a printer. The storage unit 704 may include but not limited to a magnetic disk, and an optical disk. The communication unit 709 allows the computer system 700 to exchange information/data with other devices by computer networks and/or various telecommunication networks such as the Internet, and may include but not limited to a modem, a network card, an infrared communication device, a wireless communication transceiver, and/or a chipset, such as a Bluetooth TM device, a WiFi device, a WiMax device, a cellular communication device, and/or an analogue.

The computing unit 701 may be various general-purpose and/or specialized processing components with processing and computing capabilities. Some examples of the computing unit 701 include but not limited to a central processing unit (CPU), a graphics processing unit (GPU), various specialized artificial intelligence (AI) computing chips, various computing units that run machine learning model algorithms, a digital signal processor (DSP), and any suitable processors, controllers, microcontrollers and the like. The computing unit 701 executes the various methods and processes described above. For example, the method involved in the embodiment of the present disclosure may be implemented as a computer software program, and it is tangibly contained in a machine-readable medium, such as the storage unit 708. In some embodiments, some or all of the computer programs may be loaded and/or installed onto the computer system 700 by the ROM 702 and/or the communication unit 709. In some embodiments, the computing unit 701 may be configured to execute the webpage generation method of the present disclosure by any other suitable means (for example, by means of firmware).

An exemplary embodiment of the present disclosure further provides a computer program product including a computer program, herein the computer program, when executed by a processor of a computer, is used to cause the computer to execute the method according to the embodiment of the present disclosure.

The program product used to implement the method of the present disclosure may be written in any combinations of one or more programming languages. These program codes may be provided to processors or controllers of general-purpose computers, specialized computers, or other programmable data processing apparatuses, so that when executed by the processors or controllers, the program codes implement the functions/operations specified in the flow diagrams and/or block diagrams. The program codes may be executed entirely on a machine, executed partially on a machine, executed partially on a machine as a standalone software package, executed partially on a remote machine, or executed entirely on a remote machine or server.

An exemplary embodiment of the present disclosure further provides a storage medium in which a computer program is stored, and the program, when executed by a processor, is used to implement the webpage generation method provided in the present disclosure.

In the context of the present disclosure, a storage medium may be a tangible medium that contains or stores programs for use by or in combination with an instruction execution system, apparatus, or device. The storage medium can be a machine-readable signal medium or a machine-readable storage medium. Machine readable media may include, but are not limited to, electronic, magnetic, optical, electromagnetic, infrared, or semiconductor systems, devices, or equipment, or any suitable combination of the above. More specific examples of machine-readable storage media include electrical connections based on one or more wires, portable computer disks, hard drives, random access memory (RAM), read-only memory (ROM), erasable programmable read-only memory (EPROM or flash memory), optical fibers, compact disc read-only memory (CD-ROM), optical storage devices, magnetic storage devices, or any suitable combination of the above.

In the above embodiments, it can be fully or partially implemented through software, hardware, firmware, or any combination thereof. When implemented using software, it can be fully or partially implemented in the form of a computer program product. The computer program product includes one or more computer programs or instructions. When loading and executing the computer program or instructions on a computer, all or part of the processes or functions described in embodiments of present disclosure are executed. The computer may be a general-purpose computer, a specialized computer, a computer network, a terminal, a user device, or other programmable device. The computer program or instructions may be stored in a computer-readable storage medium, or transmitted from one computer-readable storage medium to another. For example, the computer program or instructions may be transmitted from one website site, computer, server, or data center to another website site, computer, server, or data center via wired or wireless means. The computer-readable storage medium can be any available medium that a computer can access, or a data storage device such as a server or data center that integrates one or more available media. The available media may be magnetic media, such as floppy disks, hard disks, magnetic tapes; It can also be an optical medium, such as a digital video disc (DVD), or a semiconductor medium, such as a solid state drive (SSD).

Although the present disclosure has been described in conjunction with specific features and embodiments, it is evident that various modifications and combinations can be made without departing from the spirit and scope of the present disclosure. Correspondingly, this specification and the accompanying drawings are merely illustrative of the present disclosure as defined by the claims, and are deemed to cover any and all modifications, variations, combinations, or equivalents within the scope of the present disclosure. Obviously, technicians in this field can make various modifications and variations to the present disclosure without departing from the spirit and scope of the present disclosure. In this way, if these modifications and variations of the present disclosure fall within the scope of the claims and equivalent technologies of the present disclosure, then the present disclosure is also intended to include these modifications and variations.

## Claims

1. A webpage generation method, comprising:
extracting visual elements from a first webpage;
acquiring original attribute information of the visual elements, wherein the original attribute information comprises original position information, and the original position information is used to describe a position of the visual elements arranged in the first webpage; and
generating a second webpage based on the original position information, wherein the second webpage comprises at least a part of the visual elements, and the at least a part of the visual elements are arranged in the second webpage according to the original position information;
wherein a position of the at least a part of the visual element arranged in the second webpage is the same as a position of the at least a part of the visual element arranged in the first webpage.

2. The method according to claim 1, wherein the generating a second webpage based on the original position information, comprises:
clustering the at least a part of the visual element based on the original position information;
in each cluster corresponding to the original position information, arranging the visual element according to following rules based on a type of the visual element:
for text visual elements, arranging all text visual elements comprised in the cluster at a position corresponding to the cluster;
for image visual elements, arranging the image visual elements that meet a first preset condition in the cluster at a position corresponding to the cluster; and
for video visual elements, arranging the video visual elements that meet a second preset condition in the cluster at a position corresponding to the cluster;
wherein the first preset condition is related to original attribute information of the image visual element; and the second preset condition is related to a sorting of the video visual element in the cluster.

3. The method according to claim 2, wherein the original attribute information of the image visual element further comprises original size information, and the first preset condition is an image visual element with a largest original size in the cluster.

4. The method according to claim 2, wherein the second preset condition is a video visual element with a foremost sorting in the cluster.

5. The method according to claim 2, after the clustering the at least a part of the visual element based on the original position information, further comprising:
in each cluster corresponding to the original position information, selecting a visual element with a highest priority according to a priority order of the type of the visual element.

6. The method according to claim 5, wherein the priority order of the type of the visual element comprises:
the video visual element, the image visual element, and the text visual element from high priority to low priority.

7. The method according to claim 1 or 2, wherein the generating a second webpage based on the original position information, comprises:
selecting the at least a part of the visual elements from the visual elements based on a type of the visual elements;
wherein the selecting is performed according to at least one of following rules:
for text visual elements, retaining the text visual elements of which an original font conforms to a preset font condition;
for image visual elements, retaining the image visual elements of which an original size conforms to a preset size condition and/or retaining the image visual element of which an original image resource conforms to a preset image resource condition; and
for video visual elements, retaining all video visual elements that conform to a preset format condition.

8. The method according to claim 7, wherein
the preset font condition comprises that a size of the original font is not less than a median size of font sizes of all text visual elements;
the preset size condition comprises that a size of the original size is not less than a preset ratio of a screen size;
the preset image resource condition comprises a preset address source condition; and/or,
the preset format condition comprises a playing format that the second webpage is able to support.

9. The method according to claim 1, wherein the acquiring original attribute information of the visual element further comprises acquiring the original attribute information of the visual element based on a type of the visual element according to following rules:
for image visual elements, acquiring original resource information, original size information, and original position information of the image visual elements;
for text visual elements, acquiring original font information and original position information of the text visual elements; and
for video visual elements, acquiring original position information of the video visual elements that conform to a preset format.

10. The method according to claim 1, wherein the extracting a visual element from a first webpage, comprises:
loading the first webpage in a browser;
parsing the first webpage loaded;
flattening the first webpage parsed; and
extracting the visual elements from the first webpage flattened.

11. A webpage generation apparatus, comprising:
an extraction module, configured to extract visual elements from a first webpage;
an acquisition module, configured to acquire original attribute information of the visual elements, wherein the original attribute information comprises original position information, and the original position information is used to describe a position of the visual elements arranged in the first webpage; and
a webpage generation module, configured to generate a second webpage based on the original position information, wherein the second webpage comprises at least a part of the visual elements, and the at least a part of the visual elements are arranged in the second webpage according to the original position information;
wherein the position of the at least a part of the visual element arranged in the second webpage is the same as an arrangement position in the first webpage.

12. An electronic device, comprising: a memory, and a processor coupled to the memory; an instruction is stored in the memory, and the method according to any one of claims 1-10 is implemented when the instruction is executed by the processor.

13. A storage medium, on which a computer program is stored, and the method according to any one of claims 1-10 is implemented when the program is executed by a processor.

14. A computer program product, comprising a computer program, wherein the method according to any one of claims 1-10 is implemented when the computer program is executed by a processor.
